# EUROPEAN PATENT APPLICATION

(11) **EP 3 086 561 A1**
(43) Date of publication of application: **26.10.2016**
(21) Application number: 14871497.5
(22) Date of filing: 22.09.2014
(51) Int. Cl.: H04N 21/475, H04N 21/4788

(54) **INFORMATION PUSHING METHOD, DEVICE, AND SYSTEM**

(30) Priority: 19.12.2013 CN 201310705427
(71) Applicant: Huawei Technologies Co., Ltd., Longgang District Shenzhen, Guangdong 518129 (CN)
(72) Inventor: LIU, Jian, Shenzhen, Guangdong 518129 (CN)
(74) Representative: Isarpatent
(86) International application number: PCT/CN2014/087061
(87) International publication number: WO 2015/090095

(57) **Abstract**

The present invention provides an information pushing method, device and system, which relates to the field of communications, and may improve accuracy of acquiring a played video content, thereby improving accuracy of pushing information, and includes: establishing a communication connection between a primary display device and an auxiliary display device; acquiring play information from a video service system when a first play event occurs on the primary display device; acquiring a device identifier of the primary display device; acquiring play event information according to the first play event, the device identifier of the primary display device and the play information; determining information to be pushed according to a preset rule and the play event information; pushing the information to be pushed to the auxiliary display device. The information pushing method, the device and the system provided in embodiments of the present invention are used for pushing information.

## Description

This application claims priority to Chinese Patent Application No. 201310705427.7, filed with the Chinese Patent Office on December 19, 2013 and entitled "VIDEO DATA PROCESSING METHOD AND APPARATUS", which is incorporated herein by reference in its entirety.

### TECHNICAL FIELD

The present invention relates to the field of communications, and in particular, to an information pushing method, device and system.

### BACKGROUND

With the development of IPTV (Interactive Personality Television, interactive personality television), MTV (Mobile Television, mobile television) and DTV (Digital Television, digital television) services, an advertising market for a digital audio and video service also becomes mature gradually, and delivery and sales of multimedia advertising have become a market demand capable of large-scale deployment in both technology and market

In the prior art, when a user watches a video on a television, if the user wants to interact with the video being watched currently, such as tweeting, sending information to a live program or the like, the user may collect sound of the video being watched currently by a mobile phone, and then sends collected sound information to a corresponding server. The server performs an analysis of the collected sound information to determine a current play event of the television, and sends advertising information to the mobile phone according to the play event.

However, in a process of associating the television with the mobile phone, since the user needs to collect the sound of the video being watched currently, physical locations of the user and a television screen need to be very close, so that user experience is relatively low. And, if a physical distance from the mobile phone to the television is relatively far or surroundings of the television is relatively noisy, accuracy of collected sound information is relatively low, affecting accuracy of acquiring played video content, and thereby affecting accuracy of advertising information.

### SUMMARY

Embodiments of the present invention provides an information pushing method, device and system, which may improve accuracy of acquired playing video content, thereby improving accuracy of pushing information.

To achieve the above purpose, the embodiments of the present invention adopt the following technical solutions:

In a first aspect, an information pushing method is provided, including:
establishing a communication connection between a primary display device and an auxiliary display device;
acquiring play information from a video service system when a first play event occurs on the primary display device;
acquiring a device identifier of the primary display device;
acquiring play event information according to the first play event, the device identifier of the primary display device and the play information;
determining information to be pushed according to a preset rule and the play event information;
pushing the information to be pushed to the auxiliary display device.

In combination with the first aspect, in a first possible implementation manner,
the play information includes a live video play schedule or a video on demand play schedule;
the acquiring play event information according to the first play event, the device identifier of the primary display device and the play information includes:
generating an event identifier according to the first play event, for identifying a type of the first play event;
acquiring a video content identifier of the first play event according to the play information;
generating the play event information, wherein the play event information includes the event identifier, the identifier of the primary display device and the video content identifier.

In combination with the first possible implementation manner, in a second possible implementation manner, when the video service system provides a live video to the primary display device, the first play event is any of live video start, live video play and live video end, and the acquiring a video content identifier of the first play event according to the play information includes:
acquiring a real-time occurrence time of the first play event;
acquiring the live video play schedule, wherein the live video play schedule records video play time periods of live videos in the video service system and corresponding video content identifiers thereof;
querying the live video play schedule according to the real-time occurrence time of the first play event to acquire a video content identifier corresponding to a video play time period in which the real-time occurrence time is as the video content identifier of the first play event.

In combination with the first possible implementation manner, in a third possible implementation manner, when the video service system provides a video on demand to the primary display device, the first play event is any of video on demand start, video on demand play, video on demand end, video on demand fast backward and video on demand fast forward, and the acquiring a video content identifier of the first play event according to the play information includes:
acquiring a real-time occurrence time of the first play event;
acquiring the video on demand play schedule from the play information, wherein the video on demand play schedule records a play time period of each section of the video on demand and a corresponding video content identifier thereof;
querying the video on demand play schedule according to the real-time occurrence time of the first play event to acquire a video content identifier corresponding to a play time period of a section in which the real-time occurrence time is as the video content identifier of the first play event.

In a second aspect, an information pushing device is provided, including:
a connection unit, configured to establish a communication connection between a primary display device and an auxiliary display device;
a first acquiring unit, configured to acquire play information from a video service system when a first play event occurs on the primary display device;
a second acquiring unit, configured to acquire a device identifier of the primary display device;
a generating unit, configured to acquire play event information according to the first play event, the device identifier of the primary display device and the play information;
a determining unit, configured to determine information to be pushed according to a preset rule and the play event information;
a push unit, configured to push the information to be pushed to the auxiliary display device.

In combination with the second aspect, in a first possible implementation manner,
the play information includes a live video play schedule or a video on demand play schedule;
the generating unit includes:
a first generating subunit, configured to generate an event identifier according to the first play event, for identifying a type of the first play event;
an acquiring subunit, configured to acquire a video content identifier of the first play event according to the play information;
a second generating subunit, configured to generate the play event information, wherein the play event information includes the event identifier, the identifier of the primary display device and the video content identifier.

In combination with the first possible implementation manner, in a second possible implementation manner, when the video service system provides a live video to the primary display device, the first play event is any of live video start, live video play and live video end, and the acquiring subunit is specifically configured to:
acquire a real-time occurrence time of the first play event;
acquire the live video play schedule, wherein the live video play schedule records video play time periods of live videos in the video service system and corresponding video content identifiers thereof;
querying the live video play schedule according to the real-time occurrence time of the first play event to acquire a video content identifier corresponding to a video play time period in which the real-time occurrence time is as the video content identifier of the first play event.

In combination with the first possible implementation manner, in a third possible implementation manner, when the video service system provides a video on demand to the primary display device, the first play event is any of video on demand start, video on demand play, video on demand end, video on demand fast backward and video on demand fast forward, and the acquiring subunit is specifically configured to:
acquire a real-time occurrence time of the first play event;
acquire the video on demand play schedule from the play information, wherein the video on demand play schedule records a play time period of each section of the video on demand and a corresponding video content identifier thereof;
query the video on demand play schedule according to the real-time occurrence time of the first play event to acquire a video content identifier corresponding to a play time period of a section in which the real-time occurrence time is as the video content identifier of the first play event.

In a third aspect, an information pushing system is provided, including:
any of the above information pushing devices;
at least one primary display device;
at least one auxiliary display device.

The present invention provides an information pushing method, device and system, including: establishing a communication connection between a primary display device and an auxiliary display device; acquiring play information from a video service system when a first play event occurs on the primary display device; acquiring a device identifier of the primary display device; acquiring play event information according to the first play event, the device identifier of the primary display device and the play information; determining information to be pushed according to a preset rule and the play event information; pushing the information to be pushed to the auxiliary display device. In this way, the information pushing device acquires the video content identifier of the first play event according to the play information acquired from the video service system, improving accuracy of acquiring video playing content, and thereby improving accuracy of pushing information.

### BRIEF DESCRIPTION OF DRAWINGS

To illustrate technical solutions provided in embodiments of the present invention or in the prior art more clearly, a brief introduction on the accompanying drawings which are needed in the description of the embodiments or the prior art will be given below. Apparently, the accompanying drawings in the description below are merely some of the embodiments of the present invention, based on which other drawings may be obtained by those skilled in the art without any inventive efforts.
FIG. 1 is a flow diagram of an information pushing method provided by an embodiment of the present invention;
FIG. 2 is a flow diagram of another information pushing method provided by an embodiment of the present invention;
FIG. 3 is a schematic structural diagram of an information pushing device provided by an embodiment of the present invention;
FIG. 4 is a schematic structural diagram of a generating unit of an information pushing device provided by an embodiment of the present invention;
FIG. 5 is a schematic structural diagram of a generating unit of an information pushing device provided by an embodiment of the present invention;
FIG. 6 is a schematic structural diagram of an information pushing device provided by another embodiment of the present invention.

### DESCRIPTION OF EMBODIMENTS

A clear and complete description of technical solutions provided in the embodiments of the present invention will be given below, in conjunction with the accompanying drawings in the embodiments of the present invention. Apparently, the embodiments described below are merely a part, but not all, of the embodiments of the present invention. All of other embodiments, obtained by those skilled in the art based on the embodiments of the present invention without any inventive efforts, fall into the protection scope of the present invention.

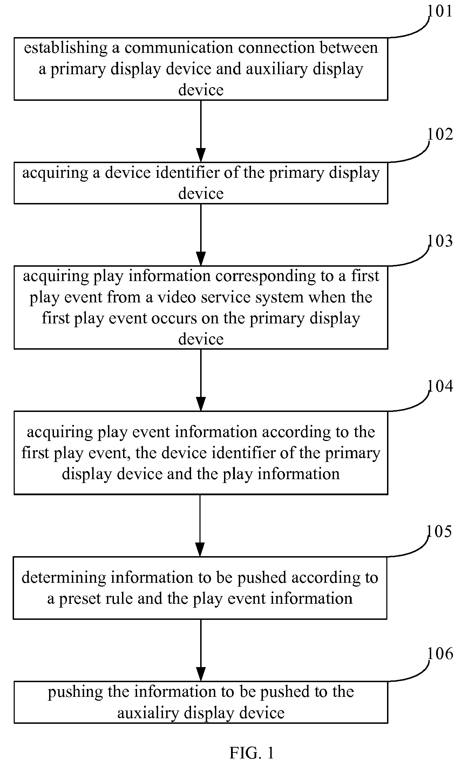

An information pushing system includes at least one primary display device and at least one auxiliary display device. When a user watches a video provided by a video service system through the primary display device, if the user wants to interact with the video being watched currently, such as tweeting, watching a related advertisement or the like, it may be realized through the auxiliary display device. An embodiment of the present invention provide an information pushing method, which is used for an information pushing device, wherein the information pushing device may be a digital television set-top box, a smart television, a game terminal with video playing function or the like, as shown in FIG. 1, including:

Step 101, establishing a communication connection between a primary display device and an auxiliary display device.

The primary display device is an electronic device having a networking capability and that may receive and decode a video data stream. It may be called an N-th screen device in the present embodiment. The primary display device includes: a smart television, a smart phone, a tablet computer and the like. The auxiliary display device generally serves as an auxiliary device of the primary display device, which may coordinate and share contents with the primary display device. It may be called an N-th screen device in the present embodiment, wherein N is greater than or equal to two. The auxiliary display device is also an electronic device having a networking capability and that may receive and decode video data stream, such as a smart television, a smart phone, a tablet computer and the like.

Step 102, a device identifier of the primary display device is acquired.

Step 103, play information corresponding to a first play event is acquired from a video service system when the first play event occurs on the primary display device.

The play information includes a live video play schedule or a video on demand play schedule.

Step 104, play event information is acquired according to the first play event, the device identifier of the primary display device and the play information.

Specifically, an information pushing device may first generate an event identifier according to the first play event for identifying a type of the first play event; and then it may acquire a video content identifier of the first play event according to the play information, wherein the play information includes a live video play schedule or a video on demand play schedule; finally it may generate the play event information, wherein the play event information includes the event identifier, the identifier of the primary display device and the video content identifier.

Step 105, information to be pushed is determined according to a preset rule and the play event information.

The pushing device presets a rule and the preset rule is to determine information which is sent to the secondary display device according to play event information of a live video or video on demand, and the information may be a live video or a video on demand, may also be contents related to the live video and the video on demand, such as an advertisement, a program interaction and the like.

Step 106, the information to be pushed is pushed to the auxiliary display device.

In this way, the information pushing device acquires the video content identifier of the first play event according to the play information acquired from the video service system, improving accuracy of acquiring video playing content, and thereby improving accuracy of pushing information.

Further, that the information pushing device acquires the video content identifier of the first play event according to the play information may be divided into two application scenarios: a first application scenario in which the video service system provides a live video to the primary display device, and a second application scenario in which the video service system provides a video on demand to the primary display device.

When the video service system provides the live video to the primary display device, the first play event is any of live video start, live video play and live video end, and the acquiring the video content identifier of the first play event according to the play information includes: the information pushing device may acquire a real-time occurrence time of the first play event, wherein the real-time occurrence time refers to a current clock time; acquire the live video play schedule from the play information, wherein the live video play schedule records video play time period of live videos in the video service system and corresponding video content identifiers thereof; query the live video play schedule according to the real-time occurrence time of the first play event to acquire a video content identifier corresponding to a video play time period in which the real-time occurrence time is as the video content identifier of the first play event.

When the video service system provides a video on demand to the primary display device, the first play event is any of video on demand start, video on demand play, video on demand end, video on demand fast backward and video on demand fast forward, and the acquiring the video content identifier of the first play event according to the play information includes: the information pushing device may acquire a real-time occurrence time of the first play event, wherein the real-time occurrence time refers to a video time corresponding to a current frame of the video on demand; acquire the video on demand play schedule from the play information, wherein the video on demand play schedule records a play time period of each section of the video on demand and a corresponding video content identifier thereof; query the video on demand play schedule according to the real-time occurrence time of the first play event to acquire a video content identifier corresponding to a play time period of a section in which the real-time occurrence time is as the video content identifier of the first play event.

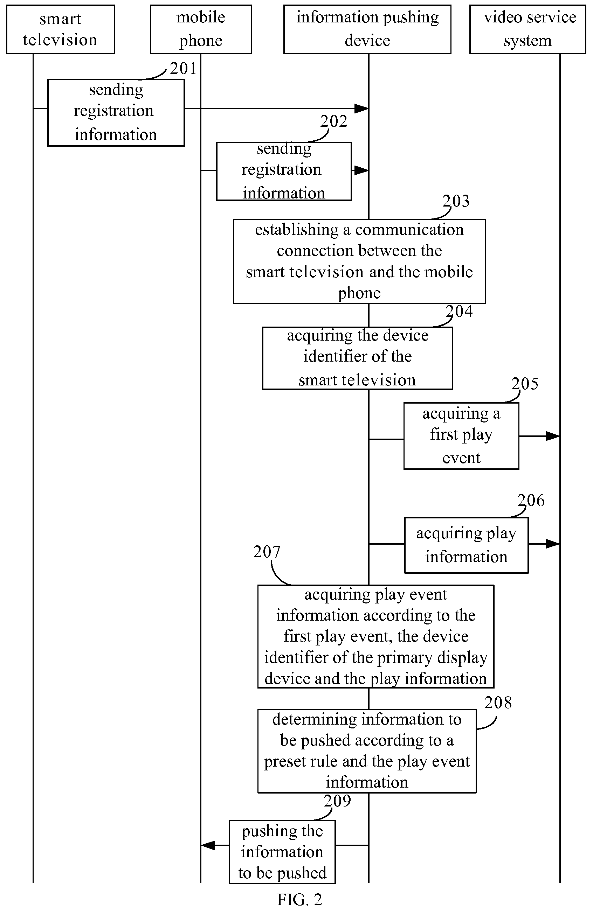

In an actual application, the information may be in multiple forms. In the present embodiment, it is assumed that the information is an advertisement, the primary display device is a smart television and the auxiliary display device is a mobile phone. The embodiment of the present invention provides an information pushing method, as shown in FIG 2, including:

Step 201, the smart television sends registration information to an information pushing device.

The registration information of the smart television includes: a device identifier of the smart television and a user identifier corresponding to the smart television. The device identifier of the smart television may be a manufacturing number, an internal chip number, a mainboard number or an identification code or the like of the television. In the present embodiment, it is assumed that the device identifier of the smart television is D0003.

After receiving the registration information, the information pushing device may store the registration information in a database. The registration information usually may be filled in a primary display device table entry of a device managing table in which device identifiers of all registered primary display device(s) and auxiliary display device(s) are recorded.

Step 202, the mobile phone sends registration information to the information pushing device.

The registration information of the mobile phone may include: a device identifier of the mobile phone, a user identifier corresponding to the mobile phone and a receiving port type. The receiving port type is used to indicate an information type that a receiving port of the mobile phone can be carried, and the information type may be a short message, a TCP (Transmission Control Protocol, transmission control protocol) /IP (Internet Protocol, internet protocol) message, and an XMPP (Extensible Messaging and Presence Protocol, extensible messaging and presence protocol) message based on TCP/IP or HTTP (Hypertext Transfer Protocol, hypertext transfer protocol). The XMPP message based on TCP/IP or HTTP may include a system notification of iOS (iPhone operation system) and Android (Android), a video carried by an IP network, a text and an image pushed by XMPP and the like.

The device identifier of the mobile phone may be a universal identification code, an IMEI (International Mobile Equipment Identity, international mobile equipment identity), an inbuilt digital certificate number or the like. In the present embodiment, it is assumed that the device identifier of the mobile phone is D0004.

After receiving the registration information, the information pushing device may store the registration information in a database. The registration information usually may be filled in an auxiliary display device table entry of the device managing table in which device identifiers of all registered primary display device(s) and auxiliary display device(s) are recorded.

Step 203, the information pushing device establishes a communication connection between the smart television and the mobile phone.

In the present embodiment, establishing the communication connection between the smart television and the mobile phone may be divided into two application scenarios. A first application scenario is that the smart television is registered before the mobile phone, and a second application scenario is that the mobile phone is registered before the smart television.

When the smart television is registered before the mobile phone, the information pushing device may acquire the device identifier of the mobile phone. As the mobile phone is registered as an auxiliary display device, device identifiers of all registered primary display devices including the smart television are queried from the device managing table, and a communication connection is established between all primary display devices and the mobile phone, in this way, the communication connection between the smart television and the mobile phone is established.

When the mobile phone is registered before the smart television, the information pushing device may acquire the device identifier of the smart television. As the smart television is registered as a primary display device, device identifiers of all registered auxiliary display devices including the mobile phone are queried from the device managing table, and a communication connection is established between all auxiliary display devices and the smart television, in this way, the communication connection between the smart television and the mobile phone is established.

It should be noted that devices such as a mobile phone may be used as either a primary display device or an auxiliary display device, so that the devices such as a mobile phone may send an advertisement to themselves.

Step 204, the information pushing device acquires the device identifier of the smart television.

The identifier of the smart television may be acquired from the smart television, may also be acquired from the registration information of the smart television stored in the information pushing device. Acquiring from the registration information of the smart television stored in the information pushing device is taken as an example in the present embodiment.

Step 205, the information pushing device acquires a first play event.

It should be noted that a video system provides a video stream for the smart television.

It should be specifically noted that there are multiple methods for acquiring the first play event, for example, a method for acquiring by a video service system, a method for acquiring by an information pushing device, a method for acquiring by a primary display device and the like. The method for acquiring by an information pushing device is taken as an example in the present embodiment.

Exemplarily, when the video service system acquiring method is adopted to acquire the first play event, if the first play event occurs, the smart television determines whether there is a video stream corresponding to the first play event in current video streams, and determines that the first play event occurs if yes, and then sends an event indication corresponding to the first play event to the video service system. After receiving the event indication, the video service system determines that the first play event occurs and informs the information pushing device. Specifically, the video service system may inform the information pushing device by calling an API (Application Programming Interface, application programming interface) of the information pushing device.

Exemplarily, when the information pushing device acquiring method is adopted to acquire the first play event, the information pushing device monitors a video stream control packet output by the video service system in real time. When feature of the output video stream control packet is same as feature of a specific control packet of the first play event in a control packet database, the first play event corresponding to the output video stream control packet is determined. It should be noted that control packets corresponding to play events are stored in the control packet database.

Exemplarily, when a connection between the video service system and the primary display device is disconnected, if a current play video has been downloaded locally to the primary display device, the method for acquiring by the primary display device may be adopted to acquire the first play event, namely, when playing a video, the smart television determining whether there is a video stream corresponding to the first play event in current video streams, if yes, the smart television sends a report message to the information pushing device directly, wherein the report message includes the first play event.

Step 206, the information pushing device acquires play information from the video service system.

The play information includes a live video play schedule or a video on demand play schedule.

The live video play schedule records video play time periods of live videos in the video service system and corresponding video content identifiers thereof; the video on demand play schedule records a play time period of each section of the video on demand and a corresponding video content identifier thereon.

Step 207, the information pushing device acquires play event information according to the first play event, the device identifier of the primary display device and the play information.

The pushing device generates an event identifier according to the first play event; acquires a video content identifier of the first play event according to the play information; and generates the play event information, wherein the play event information includes the event identifier, the device identifier of the smart television and the video content identifier.

It should be noted that acquiring the video content identifier of the first play event according to the play information may be divided into two application scenarios: a first application scenario in which the video service system provides a live video to the smart television, and a second application scenario in which the video service system provides a video on demand to the smart television.

Specifically, when the video service system provides a live video to the smart television, the first play event is any of live video start, live video play and live video end, and acquiring the video content identifier of the first play event according to the play information includes: the information pushing device may acquire a real-time occurrence time of the first play event, wherein the real-time occurrence time refers to a current clock time; acquire the live video play schedule from the play information, wherein the live video play schedule records video play time periods of live videos in the video service system and corresponding video content identifiers thereof; query the live video play schedule according to the real-time occurrence time of the first play event to acquire a video content identifier corresponding to a video play time period in which the real-time occurrence time is as the video content identifier of the first play event. Exemplarily, a real-time occurrence time of a live video is 6:30, a live video play schedule as shown in Table 1 is queried to obtain a corresponding play time period 6:00-7:00, and then a corresponding video content identifier 10 is obtained and play event information is generated.

**Table 1**

| video play time period | video content identifier |
|---|---|
| 6:00-7:00 | 10 |
| 7:00-7:30 | 11 |
| 7:30-8:00 | 12 |

Specifically, when the video service system provides a video on demand to the smart television, the first play event is any of video on demand start, video on demand play, video on demand end, video on demand fast backward and video on demand fast forward, and acquiring the video content identifier of the first play event according to the play information includes: the information pushing device may acquire a real-time occurrence time of the first play event; acquire the video on demand play schedule from the play information, wherein the video on demand play schedule records a play time period of each section of the video on demand and a corresponding video content identifier thereof; query the video on demand play schedule according to the real-time occurrence time of the first play event to acquire a video content identifier corresponding to a play time period of a section in which the real-time occurrence time is as the video content identifier of the first play event. Exemplarily, it is assumed that a real-time occurrence time of a video on demand is 0:12, a live video play schedule as shown in Table 2 is queried to obtain a corresponding play time period 0:05-0:15, a corresponding video content identifier 10 is obtained and play event information is generated.

**Table 2**

| play time period | section content identifier |
|---|---|
| 0:00-0:05 | 10 |
| 0:05-0:15 | 11 |
| 0:15-0:20 | 12 |

Step 208, information to be pushed is determined according to a preset rule and the play event information.

The pushing device may determine a current video content according to the video content identifier, and the pushing device may determine the information to be pushed in accordance with a preset rule according to an event identifier and the current video content. The preset rule may include selecting information to be pushed related to a content corresponding to the video content according to a video content identifier in the event information and determining a type of the information to be pushed that can be received by a mobile phone according to the registration information of the primary display device and auxiliary display device and the event identifier. It is assumed that the event identifier is live video pause and the video content identifier indicates that a current play video is a football match; an advertisement corresponding to the video content is selected according to the video content identifier and the registration information of the mobile phone is found according to an identifier of the smart television; the information pushing device may send a multimedia message advertisement about football to the mobile phone when the live video of the smart television pauses.

It should be noted that the information pushing device may also acquire user situation associated with a corresponding user identifier from a database when establishing a communication connection between the smart television and the mobile phone, and further perform filtration according to the user situation before pushing an advertisement. For example, it is assumed that an event identifier is video play pause, if it is acquired that gender of a user is female, she is 25 years old, her location is Beijing, and a video content identifier indicates that a currently played video is a teleplay, then when a video played on the smart television pauses, an advertisement of cosmetic or costume dressed by a character in the teleplay is sent to the mobile phone according to a preset rule. If an information type which can be carried by a receiving port of the mobile phone is a text and a picture pushed through the XMPP, an advertisement type is a text and a picture pushed through the XMPP. In this way, a corresponding advertisement may be further sent according to concrete condition of a user, thereby improving an effectiveness of the advertisement.

It should be noted that, since a receiving port type is included in registration information of the mobile phone, and the receiving port type is used for indicating an information type that can be carried by the receiving port of the mobile phone, the information pushing device may select information corresponding to the information type from a database as information to be pushed according to the receiving port type; the information type may be a short message, a TCP/IP message or an XMPP message based on TCP/IP or HTTP. The XMPP message based on TCP/IP or HTTP may include a system notification of iOS and Android, a video carried by an IP network, a text and a picture pushed through an XMPP and the like.

In this way, since the receiving port type is included in the registration information of the mobile phone, interface types may be distinguished when an advertisement is sent, thereby realizing a diversification of format and method for issuing the advertisement and improving accuracy that the advertisement hits the target.

Step 209, the information pushing device pushes the information to be pushed to the mobile phone.

It should be noted that steps 206 to 209 may be executed by an API of the information pushing device.

According to the information pushing method provided in the embodiment of the present invention, since the information pushing device is added in the information pushing system, when the first play event occurs on the primary display device, the information pushing device acquires the play information from the video service system and acquires the video content identifier, without analyzing sound information to determine the play event, improving accuracy of acquiring video playing content, thereby improving accuracy of pushing information. The user does not need to collect sound close to the television, improving user experience. And, since the receiving port type is included in the registration information of the auxiliary display device, the interface types may be distinguished when information is pushed, thereby realizing a diversification of format and method for issuing the information and improving accuracy that the information hits the target.

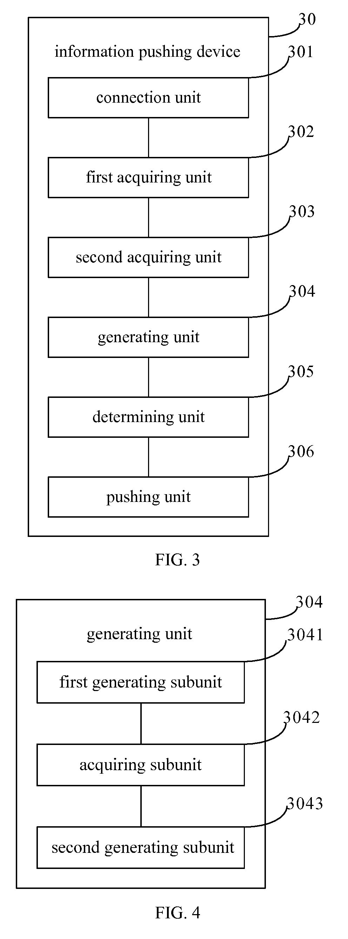

An embodiment of the present invention provides an information pushing device 30, as shown in FIG. 3, including:
a connection unit 301, configured to establish a communication connection between a primary display device and an auxiliary display device;
a first acquiring unit 302, configured to acquire play information from a video service system when a first play event occurs on the primary display device,
wherein the play information includes a live video play schedule or a video on demand play schedule;
a second acquiring unit 303, configured to acquire a device identifier of the primary display device;
a generating unit 304, configured to generate play event information according to the first play event, the device identifier of the primary display device and the play information;
a determining unit 305, configured to determine information to be pushed according to a preset rule and the play event information;
a push unit 306, configured to push the information to be pushed to the auxiliary display device.

In this way, the information pushing device acquires the video content identifier of the first play event according to the play information acquired from the video service system, improving accuracy of acquiring played video content and thereby improving accuracy of pushing information.

Further, the generating unit 304, as shown in FIG. 4, includes:
a first generating subunit 3041, configured to generate an event identifier according to the first play event, for identifying a type of the first play event;
an acquiring subunit 3042, configured to acquire a video content identifier of the first play event according to the play information;
a second generating subunit 3043, configured to generate the play event information, wherein the play event information includes the event identifier, an identifier of a primary display device and the video content identifier.

Further, that the acquiring subunit 3042 acquires the video content identifier of the first play event according to the play information may be divided into two application scenarios: a first application scenario in which the video service system provides a live video to the primary display device, and a second application scenario in which the video service system provides a video on demand to the primary display device.

Specifically, when the video service system provides a live video to the primary display device, the first play event is any of live video start, live video play and live video end. The acquiring subunit 3042 is specifically configured to: the information pushing device may acquire a real-time occurrence time of the first play event; acquire a live video play schedule, wherein the live video play schedule records video play time periods of live videos in the video service system and corresponding video content identifiers thereof; query the live video play schedule according to the real-time occurrence time of the first play event to acquire a video content identifier corresponding to a video play time period in which the real-time occurrence time is as the video content identifier of the first play event.

Specifically, when the video service system provides a video on demand to the primary display device, the first play event is any of video on demand start, video on demand play, video on demand end, video on demand fast backward and video on demand fast forward. The acquiring subunit 3042 is specifically configured to: the information pushing device may acquire a real-time occurrence time of the first play event; acquire a video on demand play schedule from the play information, wherein the video on demand play schedule records a play time period of each section of the video on demand and a corresponding video content identifier thereof; query the video on demand play schedule according to the real-time occurrence time of the first play event to acquire a video content identifier corresponding to a play time period of a section in which the real-time occurrence time is as the video content identifier of the first play event.

The present invention provides an information pushing system, including: an information pushing device; at least one primary display device; and at least one auxiliary display device.

The pushing device is used for establishing a communication connection between a primary display device and an auxiliary display device; acquiring play information from a video service system when a first play event occurs on the primary display device; acquiring a device identifier of the primary display device; generating play event information according to the first play event, the device identifier of the primary display device and the play information; determining information to be pushed according to a preset rule and the play event information; pushing the information to be pushed to the auxiliary display device.

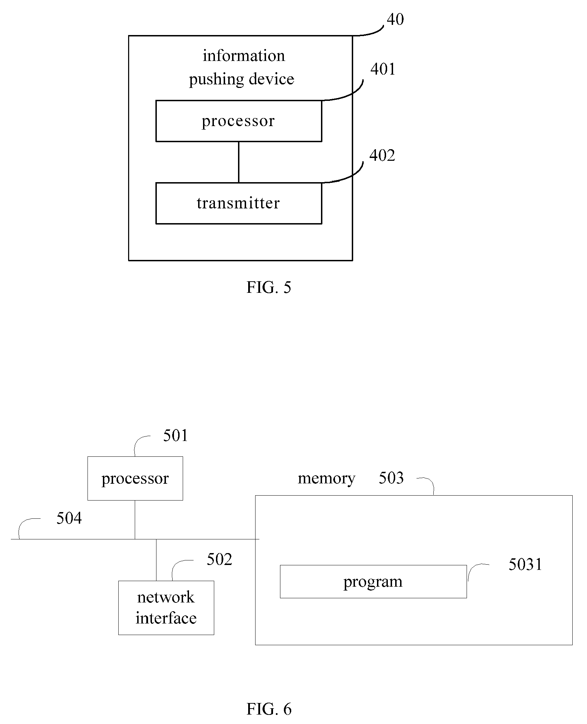

An embodiment of the present invention provides an information pushing device 40, as shown in FIG. 5, including:
a processor 401, configured to establish a communication connection between a primary display device and an auxiliary display device;
wherein the processor 401 is further configured to acquire play information from a video service system when a first play event occurs on the primary display device;
the play information includes a live video play schedule or a video on demand play schedule.
the processor 401 is further configured to acquire a device identifier of the primary display device;
the processor 401 is further configured to generate play event information according to the first play event, the device identifier of the primary display device and the play information;
the processor 401 is further configured to determine information to be pushed according to a preset rule and the play event information;
a transmitter 402, configured to push the information to be pushed to the auxiliary display device.

In this way, the information pushing device acquires the video content identifier of the first play event according to the play information acquired from the video service system, improving accuracy of acquiring played video content, and thereby improving accuracy of pushing information.

Further, the processor 401 is specifically configured to:
generate an event identifier according to the first play event, for identifying a type of the first play event;
acquire a video content identifier of the first play event according to the play information;
generate the play event information, wherein the play event information includes the event identifier, the identifier of the primary display device and the video content identifier.

Further, that the processor 401 acquires the video content identifier of the first play event according to the play information may be divided into two application scenarios: a first application scenario in which the video service system provides a live video to the primary display device, and a second application scenario in which the video service system provides a video on demand to the primary display device.

Specifically, when the video service system provides a live video to the primary display device, the first play event is any of live video start, live video play and live video end. The processor 401 is specifically configured to: the information pushing device may acquire a real-time occurrence time of the first play event; acquire the live video play schedule, wherein the live video play schedule records video play time periods of live videos in the video service system and corresponding video content identifiers thereof; query the live video play schedule according to the real-time occurrence time of the first play event to acquire a video content identifier corresponding to a video play time period in which the real-time occurrence time is as the video content identifier of the first play event.

Specifically, when the video service system provides a video on demand to the primary display device, the first play event is any of video on demand start, video on demand play, video on demand end, video on demand fast backward and video on demand fast forward. The processor 401 is specifically configured to: the information pushing device may acquire a real-time occurrence time of the first play event; acquire the video on demand play schedule from the play information, wherein the video on demand play schedule records a play time period of each section of the video on demand and a corresponding video content identifier thereof; query the video on demand play schedule according to the real-time occurrence time of the first play event to acquire a video content identifier corresponding to a play time period of a section in which the real-time occurrence time is as the video content identifier of the first play event.

FIG. 6 illustrates a structure of an information pushing device provided by another embodiment of the present invention, including at least one process 501 (for example, a CPU), at least one network interface 502 or other communication interfaces, a memory 503, and at least one communication bus 504, which is used for implementing a connection and communication among these devices. The process 501 is configured to execute an executable module stored in the memory 503, for example, a computer program. The memory 503 may include a high speed random access memory (RAM: Random Access Memory), also may include a non-volatile memory (non-volatile memory), for example, at least one disk memory. A communication connection between a system gateway of the browser and at least one other network element is implemented via at least one network interface 502 (may be wired or wireless) and the Internet, a wide area network, a local area network, a metropolitan area network or the like may be used.

In some implementation manners, the memory 503 stores a program 5031 which may be implemented by the processor 501, and the program 5031 includes:
establishing a communication connection between a primary display device and an auxiliary display device;
acquiring play information from a video service system when a first play event occurs on the primary display device;
acquiring a device identifier of the primary display device;
acquiring play event information according to the first play event, the device identifier of the primary display device and the play information;
determining information to be pushed according to a preset rule and the play event information;
pushing the information to be pushed to the auxiliary display device.

The play information includes a live video play schedule or a video on demand play schedule.

The acquiring play event information according to the first play event, the device identifier of the primary display device and the play information includes:
generating an event identifier according to the first play event, so as to identify a type of the first play event;
acquiring a video content identifier of the first play event according to the play information;
generating the play event information, wherein the play event information includes the event identifier, the identifier of the primary display device and the video content identifier.

When the video service system provides a live video to the primary display device, the first play event is any of live video start, live video play and live video end, and the acquiring a video content identifier of the first play event according to the play information includes:
acquiring a real-time occurrence time of the first play event;
acquiring the live video play schedule from the play information, wherein the live video play schedule records video play time periods of live videos in the video service system and corresponding video content identifiers thereof;
querying the live video play schedule according to the real-time occurrence time of the first play event to acquire a video content identifier corresponding to a video play time period in which the real-time occurrence time is as the video content identifier of the first play event.

When the video service system provides a video on demand to the primary display device, the first play event is any of video on demand start, video on demand play, video on demand end, video on demand fast backward and video on demand fast forward, and the acquiring a video content identifier of the first play event according to the play information includes:
acquiring a real-time occurrence time of the first play event;
acquiring the video on demand play schedule from the play information, wherein the video on demand play schedule records a play time period of each section of the video on demand and a corresponding video content identifier thereof;
querying the video on demand play schedule according to the real-time occurrence time of the first play event to acquire a video content identifier corresponding to a play time period of a section in which the real-time occurrence time is as the video content identifier of the first play event.

It should be appreciated for those of ordinary skill in the art that all or a part of the procedures in the above-mentioned embodiments of a method may be implemented with a computer program instructing corresponding hardware. The above-mentioned program may be stored in a computer readable storage medium. The procedures of the embodiments of the respective methods mentioned above may be included when the program is executed; and the above-mentioned storage medium includes various kinds of medium that may store program codes, such as a ROM, a RAM, a magnetic disk, an optical disk, or the like.

The foregoing descriptions are merely specific embodiments of the present invention, rather than limiting the protection scope of the present invention. Any change or substitution that is readily conceived for any one skilled in the art within the technical scope disclosed by the invention shall fall into the protection scope of the invention. Therefore, the protection scope of the present invention shall be defined by the claims.

## Claims

1. An information pushing method, comprising:
establishing a communication connection between a primary display device and an auxiliary display device;
acquiring play information from a video service system when a first play event occurs on the primary display device;
acquiring a device identifier of the primary display device;
acquiring play event information according to the first play event, the device identifier of the primary display device and the play information;
determining information to be pushed according to a preset rule and the play event information;
pushing the information to be pushed to the auxiliary display device.

2. The method according to claim 1, wherein
the play information comprises a live video play schedule or a video on demand play schedule;
the acquiring play event information according to the first play event, the device identifier of the primary display device and the play information comprises:
generating an event identifier according to the first play event, for identifying a type of the first play event;
acquiring a video content identifier of the first play event according to the play information;
generating the play event information, wherein the play event information comprises the event identifier, the identifier of the primary display device and the video content identifier.

3. The method according to claim 2, wherein when the video service system provides a live video to the primary display device, the first play event is any of live video start, live video and live video end, and the acquiring a video content identifier of the first play event according to the play information comprises:
acquiring a real-time occurrence time of the first play event;
acquiring the live video play schedule from the play information, wherein the live video play schedule records video play time periods of live videos in the video service system and corresponding video content identifiers thereof;
querying the live video play schedule according to the real-time occurrence time of the first play event to acquire a video content identifier corresponding to a video play time period in which the real-time occurrence time is as the video content identifier of the first play event.

4. The method according to claim 2, wherein when the video service system provides a video on demand to the primary display device, the first play event is any of video on demand start, video on demand play, video on demand end, video on demand fast backward and video on demand fast forward, and the acquiring a video content identifier of the first play event according to the play information comprises:
acquiring a real-time occurrence time of the first play event;
acquiring the video on demand play schedule from the play information, wherein the video on demand play schedule records a play time period of each section of the video on demand and a corresponding video content identifier thereof;
querying the video on demand play schedule according to the real-time occurrence time of the first play event to acquire a video content identifier corresponding to a play time period of a section in which the real-time occurrence time is as the video content identifier of the first play event.

5. An information pushing device, comprising:
a connection unit, configured to establish a communication connection between a primary display device and an auxiliary display device;
a first acquiring unit, configured to acquire play information from a video service system when a first play event occurs on the primary display device;
a second acquiring unit, configured to acquire a device identifier of the primary display device;
a generating unit, configured to acquire play event information according to the first play event, the device identifier of the primary display device and the play information;
a determining unit, configured to determine information to be pushed according to a preset rule and the play event information;
a push unit, configured to push the information to be pushed to the auxiliary display device.

6. The information pushing device according to claim 5, wherein
the play information comprises a live video play schedule or a video on demand play schedule;
the generating unit comprises:
a first generating subunit, configured to generate an event identifier according to the first play event, for identifying a type of the first play event;
an acquiring subunit, configured to acquire a video content identifier of the first play event according to the play information;
a second generating subunit, configured to generate the play event information, wherein the play event information comprises the event identifier, the identifier of the primary display device and the video content identifier.

7. The information pushing device according to claim 6, wherein when the video service system provides a live video to the primary display device, the first play event is any of live video start, live video play and live video end, and the acquiring subunit is specifically configured to:
acquire a real-time occurrence time of the first play event;
acquire the live video play schedule, wherein the live video play schedule records video play time periods of live videos in the video service system and corresponding video content identifiers thereof;
query the live video play schedule according to the real-time occurrence time of the first play event to acquire a video content identifier corresponding to a video play time period in which the real-time occurrence time is as the video content identifier of the first play event.

8. The information pushing device according to claim 6, wherein when the video service system provides a video on demand to the primary display device, the first play event is any of video on demand start, video on demand play, video on demand end, video on demand fast backward and video on demand fast forward, and the acquiring subunit is specifically configured to:
acquire a real-time occurrence time of the first play event;
acquire the video on demand play schedule from the play information, wherein the video on demand play schedule records a play time period of each section of the video on demand and a corresponding video content identifier thereof;
query the video on demand play schedule according to the real-time occurrence time of the first play event to acquire a video content identifier corresponding to a play time period of a section in which the real-time occurrence time is as the video content identifier of the first play event.

9. An information pushing system, comprising:
the information pushing device according to any of claims 5 to 8;
at least one primary display device;
at least one auxiliary display device.
